Europäisches Patentamt

European Patent Office

Office européen des brevets

(19)

(11) Veröffentlichungsnummer: **0 211 989**
**A1**

(12) **EUROPÄISCHE PATENTANMELDUNG**

(21) Anmeldenummer: 85110548.6

(22) Anmeldetag: 22.08.85

(51) Int. Cl.⁴: **B29C 43/24** , B29C 43/02 ,
G01B 11/02

(43) Veröffentlichungstag der Anmeldung:
04.03.87 Patentblatt 87/10

(84) Benannte Vertragsstaaten:
DE FR GB IT

(71) Anmelder: **Albrecht Bäumer KG**
**Spezialmaschinenfabrik**
**Asdorfer Strasse 96-106**
**D-5905 Freudenberg(DE)**

(72) Erfinder: **Morgenstern, Bodo, Dr.**
**Am Strauch 2**
**D-3550 Marburg-Wehrshausen(DE)**
Erfinder: **Zschietzschmann, Rolf**
**Sebastian-Kneipp-Strasse 18**
**D-5240 Betzdorf(DE)**

(74) Vertreter: **Blumbach Weser Bergen Kramer**
**Zwirner Hoffmann Patentanwälte**
**Sonnenbergerstrasse 43**
**D-6200 Wiesbaden 1(DE)**

(54) Verfahren und Gerät zur Abschätzung der Menge des wulstförmigen Vorratsmaterials zwischen Kalanderwalzen.

(57) Die Menge des wulstförmigen Vorratsmaterials zwischen Kalanderwalzen wird aufgrund der Wulsthöhe abgeschätzt. Hierzu wird ein Lichtfleck - schräg auf den Wulst (23, 24, 25) mittels einer Projektionseinrichtung (31) geworfen und eine Lichtempfangseinrichtung (32) quer zu den möglichen Lichtfleckorten (53, 54, 55) angeordnet, um unterschiedliche Wulsthöhen ($h_3$, $h_4$, $h_5$) durch unterschiedlich erregte Bildstellen (63, 64, 65) zu erfassen.

EP 0 211 989 A1

Fig.1

## Verfahren und Gerät zur Abschätzung der Menge des wulstförmigen Vorratsmaterials zwischen Kalanderwalzen

Die Erfindung bezieht sich auf ein Verfahren zum Abschätzen der Menge des wulstförmigen Vorratsmaterials (Wulst) zwischen Kalanderwalzen, mit folgenden Maßnahmen:

Wenigstens ein Lichtbündel wird auf die Wulstoberfläche geworfen, um dort einen Lichtfleck zu erzeugen; der Lichtfleck wird auf mindestens einem zugeordneten Fotodetektor abgebildet, und die feststellbare Intensitätsverteilung infolge der Abbildung wird zur Abschätzung ausgewertet.

Ein bekanntes Verfahren dieser Art (DE-A-33 01 462) beruht darauf, daß der Walzenspalt mit einem linienförmigen Lichtfleck beleuchtet wird und daß aus der Intensitätsverteilung der dabei entstehenden Lichtlinie die Breite des Wulstes ermittelt wird, woraus die Materialmenge des Wulstes abgeschätzt wird. Im einzelnen erfaßt der linienförmige Lichtfleck sowohl die Wulst als auch die benachbarten Walzenpaare, von denen Reflexionen ausgehen, welche die Intensitätsverteilung in der Lichtlinie beeinflussen. Die Wulstbreite wird aufgrund zweier Kontrastsprünge ermittelt. Diese Kontrastsprünge sind am deutlichsten, wenn der linienförmige Lichtfleck etwa senkrecht auf die Wulst geworfen wird und das Licht ebenfalls senkrecht über der Wulst optoelektrisch aufgenommen wird. Nachteilig bei dieser Vorgehensweise ist der Umstand, daß von der Wulst auch Reflexionen ausgehen, die an schwankender Stelle der Abbildung des linienförmigen Lichtflecks vorhanden sein werden und ebenfalls einen Kontrastsprung erzeugen können. Die sichere Feststellung der Breite der Wulst ist dadurch gefährdet.

Ausgehend von der Erkenntnis, daß als Maß für die zu ermittelnde Materialmenge im Wulst auch die Wulsthöhe dienen kann, wird mit der Erfindung die Aufgabe gelöst, die Höhe derWulst an einer oder mehreren Stellen in Wulstlängsrichtung zu messen.

Zur Lösung dieser Aufgabe weist das Lichtbündel einen solchen Querschnitt und einen solchen Einfallwinkel auf die Wulstoberfläche auf, daß das Lichtbündel bei Ausbildung einer Wulst über eine Mindestgröße nur auf die Wulstoberfläche trifft und der erzeugte Lichtfleck in Breitenrichtung der Wulst schmal ist. Die Lage des abgebildeten Lichtflecks auf dem Fotodetektor wird zur Bestimmung der Höhe des Wulstes ausgewertet.

Das erfindungsgemäße Verfahren kann zur Bestimmung der Wulsthöhen von mehreren aufeinanderfolgenden Kalanderwalzenpaaren angewendet werden, die in Durchlaufrichtung hintereinander angeordnet sind. Die richtige Abschätzung der Menge des wulstförmigen Vorratsmaterials in einer Kalanderanlage ist für die automatische Steuerung dieser Anlage bedeutsam.Die Größe der Wulst beeinflußt nämlich den Druck auf die Kalanderwalzen und damit deren Durchbiegung und somit indirekt die Dickenverteilung des Produkts. Wenn dünne Folien gewalzt werden müssen, muß die Gefahr der Berührung der Walzen vermieden werden, da sonst deren Oberfläche beschädigt werden könnte. Es ist also dafür zu sorgen, daß immer etwas Vorratsmaterial im Wulst vorhanden ist. Dieses Problem ist nicht allein durch Überwachen des ersten Kalanderwalzenpaares in der Produktionsreihe zu lösen, weil an nachfolgenden Kalanderwalzenpaaren Fehler auftreten können, beispielsweise dahingehend, daß die Folie sich nicht richtig an einem Kalanderwalzenpaar ablöst, dann abreißt und die Wulst an einem nachfolgenden Kalander walzenpaar schnell leerläuft.

Die Erfindung bezieht sich auch auf ein Gerät zur Durchführung des Verfahrens und weist eine Lichtfleckprojektionseinrichtung, eine Lichtauffangeinrichtung einschließlich eines Fotodetektors und eine Analyseanordnung auf. Der Fotodetektor weist mehrere Empfangsbereiche zur Unterscheidung von Lichtintensitätsverteilungen auf und gibt dementsprechend Signale ab. Die Analyseanordnung wertet die Signale des Fotodetektors zur Abschätzung der Wulstmenge aus. Erfindungsgemäß bildet die Lichtfleckprojektionseinrichtung einen in Breitenrichtung des Wulstes schmalen Lichtfleck in der Nähe der zu erwartenden Wulstoberfläche ab oder sendet ein enges Parallelstrahlenbündel an diese Stelle, so daß je nach der tatsächlichen Lage der Wulstoberfläche bzw. der Höhe des Wulstes unterschiedliche Lichtfleckorte entlang der optischen Achse der Lichtfleckprojektionseinrichtung anzutreffen sind. Die Lichtfleckauffangeinrichtung weist erfindungsgemäß eine optische Achse auf, die quer zur optischen Achse der Lichtfleckprojektionseinrichtung ausgerichtet ist. Die Lichtfleckauffangeinrichtung ist wie ein Auge ausgebildet, in dessen Blickfeld sich die Lichtfleckorte erstrecken, welche an unterschiedlichen Stellen der "Netzhaut" abgebildet werden. Das remittierte Licht wird an der Lichtfleck-Abbildungsstelle genügend stark konzentriert, um den Fotowandler zu erregen. Die Anordnung wird vorzugsweise so getroffen, daß hauptsächlich das reflektierte Licht an der Oberfläche des Wulstes ausgenutzt wird. In jedem Fall sind die Bildpunkte genügend voneinander getrennt, da sich auch die Lichtfleckorte als Objektpunkt in etwas unterschiedlichen Blickrichtungen der Lichtauffangeinrichtung darbieten.

Die Erfindung wird anhand der Zeichnungen beschrieben. Dabei zeigt:

Fig. 1 eine Kalanderwalzenanordnung mit erfindungsgemäßen Geräten in schematischer Darstellung,

Fig. 2 eine erste Anordnung einer Lichtfleckprojektions-und Auffangeinrichtung - schematisch,

Fig. 3 eine zweite Ausführungsform, perspektivisch,

Fig. 4 eine dritte Ausführungsform, perspektivisch und teilweise geschnitten,

Fig. 5 eine vierte Ausführungsform und

Fig. 6 mit Fig. 7 mögliche Einzelheiten an dem Gerät zur Dunstabweisung.

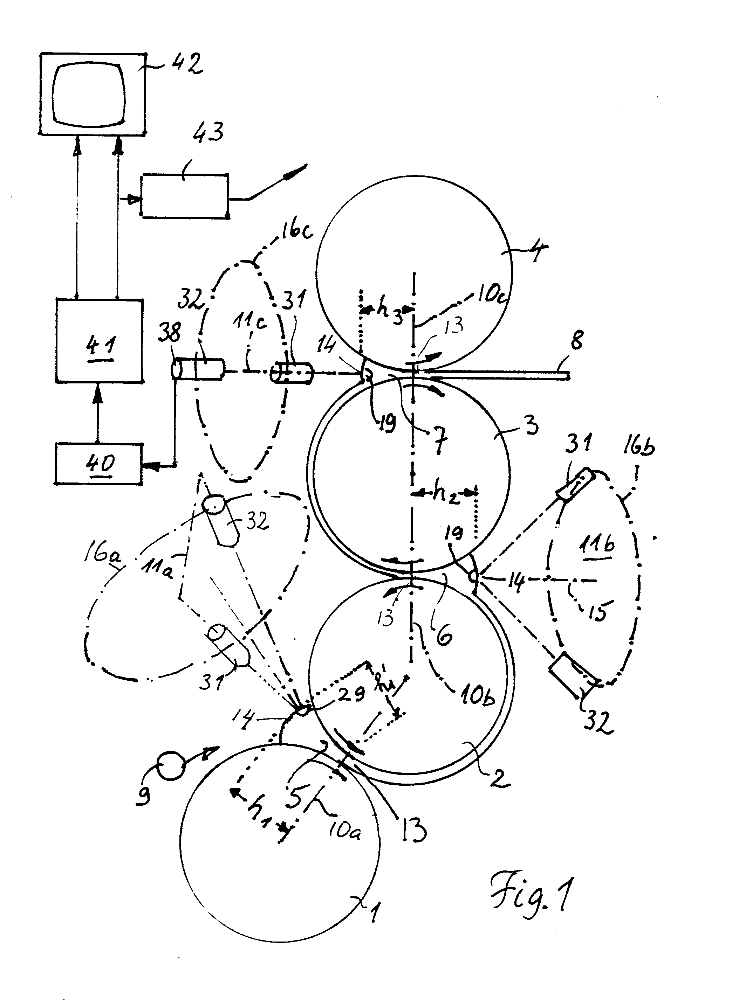

In Fig. 1 sind Kalanderwalzen 1 bis 4 schematisch dargestellt, die zu einer Folienherstellungsmaschine gehören, welche an sich bekannt ist und deshalb nicht weiter beschrieben werden muß. Die Walzen 1 bis 4 drehen sich in den angegebenen Pfeilrichtungen und arbeiten paarweise miteinander in der Weise zusammen, daß Material aus jeweils einer Wulst 5 , 6 oder 7 durch den jeweiligen Walzenspalt 13 zwischen angrenzenden Walzenpaaren gezogen wird. Dabei wird das Material geknetet (weswegen die Wülste auch als Knet bezeichnet werden) und fortlaufend auf dünneren Querschnitt gebracht. Bei Inbetriebnahme ist dafür gesorgt worden, daß das Material nicht an den Walzenteilen kleben bleibt, die das Material zurück fördern würden. Ausgewalzte Folie verläßt die Anlage bei 8, während frisches Material bei 9 nachgefüttert wird.

Die Achsen benachbarter Walzen liegen normalerweise jeweils in einer gemeinsamen Ebene 10a, 10b, 10c, und die Wülste 5, 6 bzw. 7 erheben sich über diese jeweiligen Ebenen 10a, 10b, 10c um ein gewisses Höhenmaß h, welches in den gezeichneten Beispielen die Maße h1, h2 und h3 angenommen hat. Da in einer bestehenden Anlage die Dicke der Walzen 1 bis 4 und der jeweilige Walzenspalt 13 für eine bestimmte Dicke der Folie 8 als konstant gelten können, ist das Volumen jedes Wulstes 5, 6 oder 7 mit der Höhe h1, h2 oder h3 verknüpft. Wenn man eine bestimmte Wölbung der jeweiligen Wulstoberfläche annimmt, könnte man eine eindeutige Zuordnung in Form einer Funktion oder einer Funktionstabelle zwischen Höhe h und Volumen des Wulstes angeben. In der Praxis ist mit gewissen örtlichen und zeitlichen Schwankungen der Wulstoberfläche zu rechnen, insbesondere des Wulstes 5, so daß man über mehrere ermittelte Werte von h mittelt , um zu einer gültigen Aussage zu gelangen. Durch die Materialzufuhr in die jeweilige Wulst wird deren Oberflächenausbildung gestört, und es vergeht eine gewisse Zeit, bis sich die Störung wieder rückgebildet hat. Die Mittlungszeit muß groß gegen diese Störungszeit sein. Andererseits darf die Mittlungszeit nicht so groß sein, daß unterdessen bei unterbrochener Zulieferung von Material - (Fütterung) der Wulstinhalt leerläuft und die benachbarten Walzen mit ihren Oberflächen aufeinanderlaufen, was zu deren Beschädigung führen könnte. Die Mittlungszeit muß also klein gegen die Aufbrauchzeit des Wulstinhaltes sein. Von diesen Einschränkungen abgesehen, ist die gemittelte Höhe h ein gutes Maß des zugehörigen Volumens der Wulst.

In Fig. 1 sind die Wülste 5, 6 und 7 jeweils als Bögen dargestellt, die jeweils einen Scheitel 14 über ihrer zugehörigen Ebene 10a, 10b, 10c aufweisen. An den Scheiteln 14 der Wülste 6 und 7 sind Lote 15 errichtet, die jeweils als Achse eines zugehörigen Kegels 16b, 16c mit Spitze auf den Scheitel 14 des zugehörigen Wulstes gedacht werden können. Für den Kegel 16b sei angenommen, daß sein halber Öffnungswinkel 45° beträgt und daß entlang von diametral gegenüberliegenden Mantellinien zur Aussendung eines schmalen Lichtbündels (schmäler als die Wulstbreite) und eine Lichtfleckempfangseinrichtung 32 angeordnet sind, die demnach auf den Scheitel 14 der Wulst 6 gerichtet sind. Wenn man einen punktförmigen Lichtfleck 19 am Scheitelpunkt 14 zugrunde legt, kann man offenbar die Geräteanordnung mit dem Kegel 16b um die Achse 15 drehen, ohne daß sich am Meßergebnis etwas ändert. Dies bedeutet, daß man eine gewisse Freiheit in der Anordnung der Geräteteile 31, 32 hat, solange man lediglich eine Überwachung der richtigen Wulsthöhe h2 auszuführen hat. Wenn die Wulsthöhe über einen gewissen Schwankungsbereich gemessen werden soll, sind die Anordnungen nach 16a und 16c besser geeignet, bei denen die Lichtfleckprojektions- und -empfangseinrichtungen 31, 32 in jeweils einer Ebene 11a bzw. 11c parallel zu den Walzenachsen (also senkrecht zur Zeichen ebene) angeordnet sind.

Die Lichtempfangseinrichtung 32 enthält einen fotoelektrischen Wandler 38, dessen abgegebene Spannungen von einem Verstärker 40 verstärkt und einem Computer 41 als Signalaufbereitungseinrichtung zugeführt wird. Der Computer steuert ein Anzeigegerät 42 und ein Auslösegerät 43, welches Signale für die Steuerung der Walzenanlage abgibt, insbesondere die Zufuhr von Material regelt. Diese Geräteteile brauchen nicht im einzelnen beschrieben zu werden, beispielsweise hat man hinsichtlich verwendbarer Computer 41 und Anzeigegerät 42 eine sehr große Auswahl.

Die Auslöseschaltung 43 ist an die jeweilige Walzenanlage angepaßt und kann vom Durchschnittsfachmann ebenfalls leicht erstellt werden, da nur Steuerbefehle in geeigneter Form für die verschiedenen Maschinenteile der Walzenanlage aufgrund der Computersignale erzeugt werden müssen.

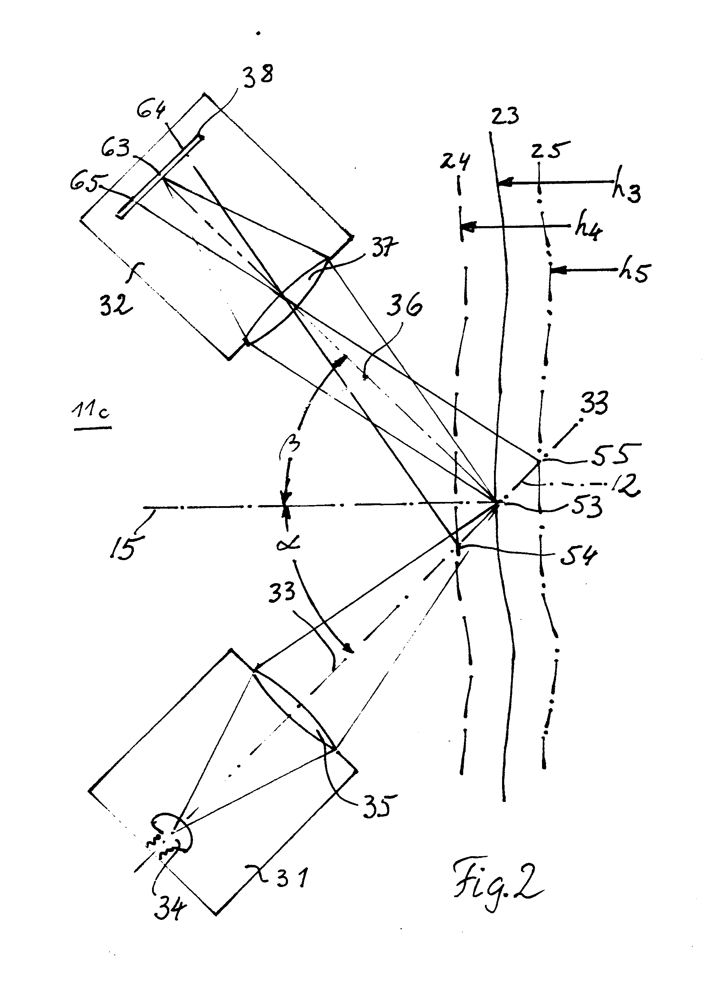

In Fig. 2 ist ein Ausführungsbeispiel der Lichtfleckprojektionseinrichtung und -empfangseinrichtung 31, 32 dargestellt. Die Lichtfleckprojektionseinrichtung 31 enthält entlang einer optischen Achse 33 eine Glühlampe 34 und ein Projektionsobjektiv 35, während die Lichtfleckempfangseinrichtung 32 entlang ihrer optischen Achse 36 angeordnet ein Abbildungsobjektiv 37 und einen Fotodetektor 38 besitzt. Der Fotodetektor 38 ist in mehrere Empfangsbereiche aufgeteilt, die punktförmig oder linienförmig verlaufen können. Fotodetektoren unterschiedlicher Bauart sind brauchbar, beispielsweise sogenannte CCD-Flächen-oder Liniendetektoren. Die optischen Achsen 33 und 36 liegen in der Ebene 11c, die den Wulst 7 je nach dessen Höhe h in einer Scheitellinie 23, 24 oder 25 mit zugehöriger Höhe h3, h4 oder h5 schneidet. Die Wulstoberfläche wird schräg angestrahlt, so daß ein Lichtfleck entweder bei 53 oder 54 oder 55 entsteht. Der Winkel $\alpha$, $\beta$ zwischen der optischen Achse 33, 36 und dem Lot 15 auf die Wulstoberfläche beträgt vorzugsweise 45°. Die Lichtfleck orte 53, 54, 55 liegen in einer gemeinsamen Ebene 12. Die Lichtfleckempfangseinrichtung 32 ist mit ihrer optischen Achse 36 quer zu dieser Ebene 12 angeordnet, und das Abbildungssystem 37 ist auf diese Ebene 13 scharf eingestellt. Die Lichtflecke 53, 54, 55 werden an zugeordneten Abbildungsstellen 63, 64, 65 des Fotodetektors 38 abgebildet. Wie bereits erläutert, besteht dieser aus unterschiedlichen Bereichen oder Elementen, so daß die unterschiedlichen Abbildungsstellen 63, 64, 65 voneinander unterschieden werden können. Zu jeder Abbildungsstelle 63, 64, 65 gehört somit eine unterschiedliche Wulsthöhe h3, h4, h5.

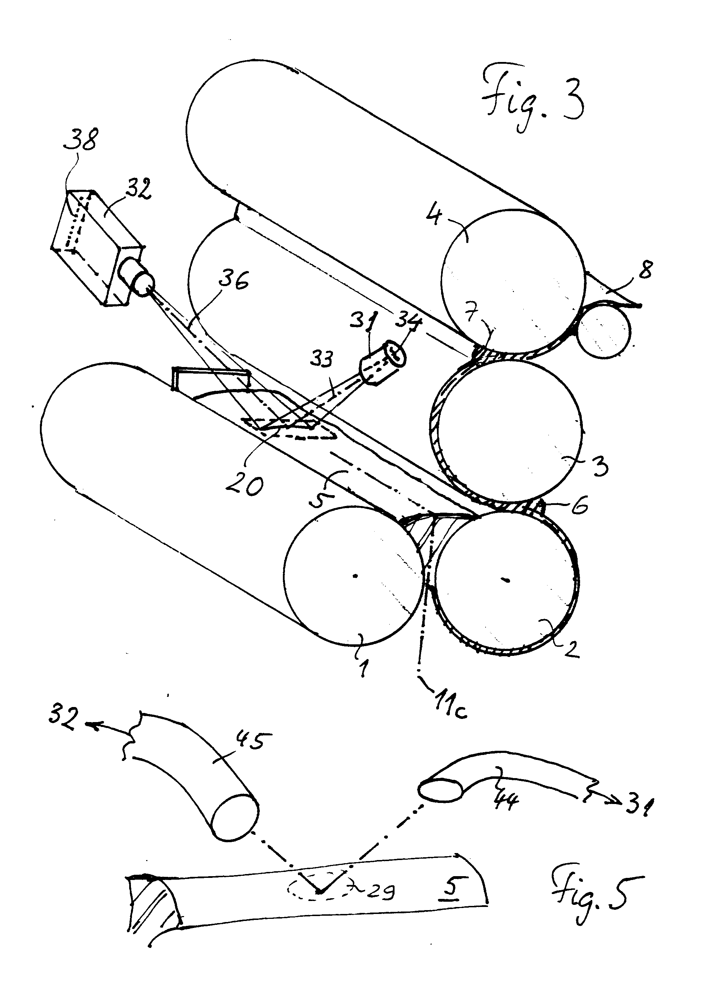

Fig. 3 zeigt eine Kalanderwalzenanordnung in perspektivischer Darstellung unter Benutzung der Bezugszeichen von bereits beschriebenen Bauteilen. Die Anordnung der Kalanderwalzen 1, 2 und der Lichtfleckprojektionseinrichtung und -empfangseinrichtung 31, 32 entsprechen derjenigen bei 16c in Fig. 1 bzw. nach Fig. 2, jedoch sei angenommen, daß die Glühlampe 34 einen länglichen Glühfaden besitzt, der als Lichtlinie 20 auf der Wulstoberfläche abgebildet wird. Diese breitere Ausleuchtung hat den Vorteil, daß die Ausrichtung der Lichtfleckempfangseinrichtung 32 zur Ebene 11c weniger empfindlich ist. Bei Verwendung eines CCD-Liniendetektors als fotoelektrischem Wandler 38 wird jeweils ein Punkt der Detektorlinie erregt, auch wenn eine leichte Fehlausrichtung zur Ebene 11c eingetreten sein sollte. Jeder Punkt auf dem Liniendetektor 38 entspricht einer bestimmten Höhe h der Wulst 5.

Um rasch auf eine gleichmäßige Verteilung des Materials im Wulst 5 zu kommen, wird häufig die sogenannte Flachdüsenbeschickung (Fig. 4) angewendet. Hierbei ist ein Extruder 70 mit einer - schlitzförmigen Auslaßdüse 71 vorgesehen, wodurch ein Materialband 72 entsteht, das in den Walzenspalt 13 einfließt und aus dem der Wulst 5 gespeist wird. Bei dieser Beschickungsart ist wenig Platz zur Abtastung der Wulsthöhe gegeben. Es wird deshalb nicht der Scheitel 14 des Wulstes 5 zentral angeleuchtet und abgetastet, sondern eine benachbarte seitliche Stele 29 (Fig. 1 und 4). Die Wulsthöhe nimmt dann das Maß h1' an, die zur maximalen Wulsthöhe h1 in umrechenbarer Beziehung steht und ebenfalls zur Errechnung des Wulstinhaltes hergenommen werden kann. Um das Licht an dem Extruder 70 vorbei zu führen, benutzt man einen Spiegel 39, der die optischen Achsen 33 und 36 knickt und um vorspringende Teile des Extruders 70 herumlenkt.

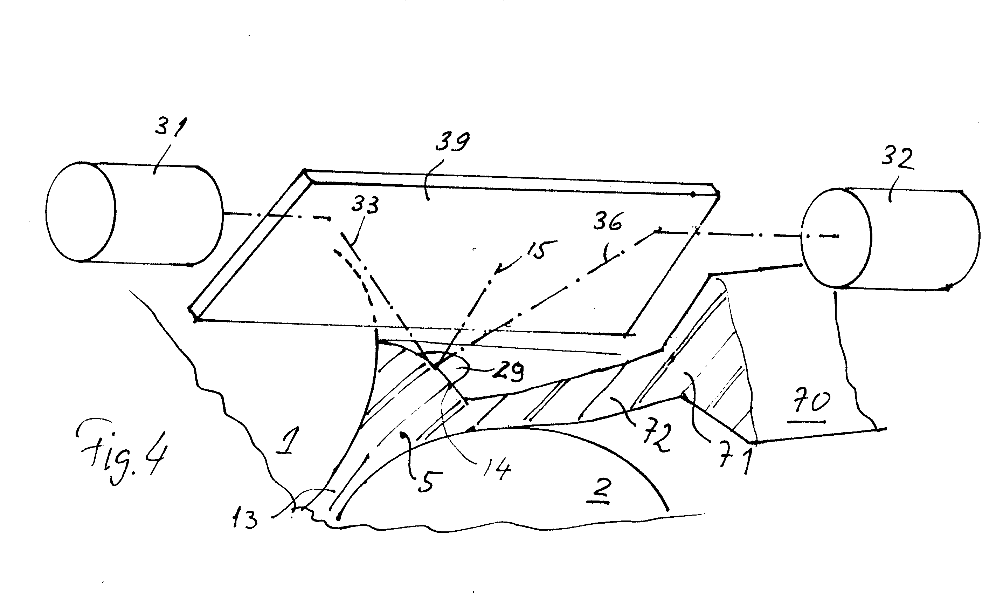

Fig. 5 zeigt eine Abwandlung der Lichtführung um den Extruder 70 herum. Ein Lichtleiterbündel 44 wird als vorderes Teil der Lichtfleckprojektionseinrichtung 31 angewendet. Auch die Lichtfleckempfangseinrichtung 32 kann ein Lichtleiterbündel 45 besitzen, wobei die Enden der Lichtleiter auf zugeordnete Elemente des Fotodetektors führen. Alternativ kann auch ein Lichtkanal mit teilweise spiegelnden Wänden verwendet werden.

Bei den bisher beschriebenen Ausführungsformen nach Fig. 2 bis 5 waren die optischen Achsen 33 und 36 in Ebenen 11a, 11c gelegen, zu denen die Achsen der Walzen 1 bis 4 parallel laufen. Wie aber bereits anhand von Fig. 1 mit Kegel 16b erläutert wurde, kann die gemeinsame Ebene 11 der optischen Achsen 33 und 36 auch die Achsen der Walzen 1 bis 4 schneiden-die dem Kegel 16b zugeordnete Ebene 11b ist die Zeichenebene, auf der die Achsen der Walzen 1 bis 4 senkrecht stehen -jedoch ist diese letzte Anordnung zum Empfang von Spiegelreflexion weniger günstig. Wenn dagegen ein spitzer Winkel zwischen der Ebene 11 und der Achsrichtung der Walzen 1 bis 4 eingehalten wird, nähert man sich den besprochenen Verhältnissen der Ausführungsform nach Fig. 2 bis 5 an.

Zur Erzeugung eines schmalen Lichtbündels entlang der optischen Achse 33 kann man auch einen Laser oder eine sonstige Lichtquelle benutzen.

Wenn die Lichtfleckprojektions-und empfangseinrichtungen 31, 32 außerhalb sich gegenüberstehender Mantellinien eines Kegels angeordnet sind, dann kommt es zu Lichteinbußen im Empfangssystem, da dann nur diffus reflektiertes Licht empfangen wird ,und keine Spiegelreflexionen.

Um die Wulsthöhe zu messen, kann man mit den Geräteteilen 31, 32 entlang der Wulst fahren - (traversieren); es ist aber auch möglich, eine Mehrfachanordnung der Geräteteile 31, 32 vorzusehen und eine Mittelwertbildung in geeigneter Weise vorzunehmen.

Das Ausgangsmaterial bei der Herstellung von Folien ist weich und hat eine hohe Temperatur, was es mit sich bringt, daß Dünste abgegeben werden. Solche Dünste müssen von allen optischen Oberflächen ferngehalten werden, da ein Beschlagen der optischen Oberflächen diese "blind" machen würde. Gefährdete Oberflächen kann man auf hoher Temperatur halten oder auf hohe Temperatur bringen. Alternativ ist es auch möglich, mit einem inerten Gas, z.B. gereinigter Luft, die gefährdeten optischen Oberflächen zu umspülen.

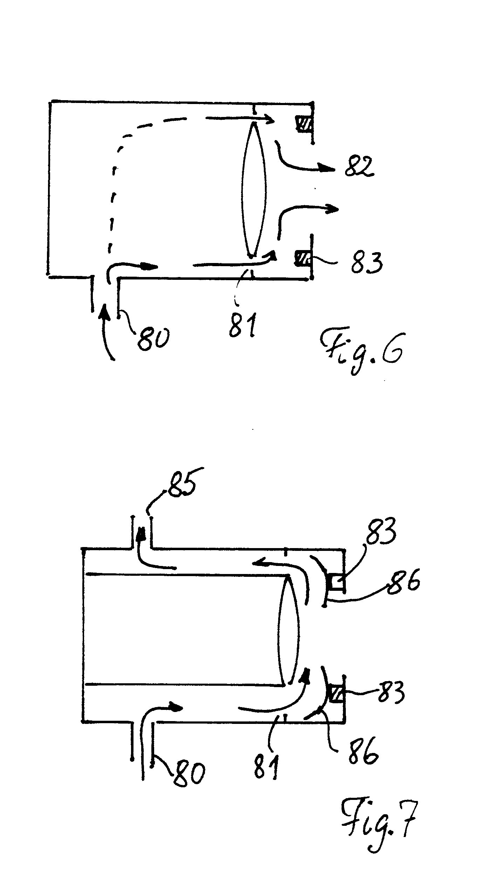

Fig. 6 zeigt schematisch die Zuführung von gereinigter Luft bei 80, die durch Öffnungen 81 nahe der äußeren Linsenoberfläche austritt und axial wegströmt, wie bei 82 dargestellt. Auf diese Weise wird die optische Oberfläche abgeschirmt. Wenn die Gefahr besteht, daß sich der Dunst an der äußeren Gehäuseoberfläche niederschlägt und dann ins Innere kriecht ("Oberflächendiffusion"), kann durch einen Ring aus oberflächenaktivem Material 83 eine Falle gebaut werden, die den Kriechstrom ins Innere unterbricht.

Es ist auch möglich, den gereinigten Luftstrom quer über die gefährdete optische Oberfläche zu leiten, wie in Fig. 7 dargestellt. Diametral zu den Öffnungen 81 sind weitere Öffnungen 84 und ein Absaugstutzen 85 vorgesehen. Die Luftströmung kann durch Leitbleche 86 quer über die gefährdete optische Oberfläche zusätzlich geführt werden.

## Ansprüche

1. Verfahren zur Abschätzung der Menge des wulstförmigen Vorratsmaterials (Wulst) zwischen Kalanderwalzen, mit folgenden Maßnahmen:

mindestens ein Lichtbündel wird auf die Wulstoberfläche geworfen, um dort einen Lichtfleck - (19,20,29) zu erzeugen; der Lichtfleck (19, 20, 29) wird auf einem zugeordneten Fotodetektor (38) abgebildet;

die Intensitätsverteilung infolge der Abbildung (63, 64, 65) wird gemessen und ausgewertet;

**gekennzeichnet** durch folgende Merkmale:

das Lichtbündel weist einen solchen Querschnitt und einen solchen Einfallwinkel auf die Wulstoberfläche auf, daß das Lichtbündel bei Ausbildung einer Wulst (5, 6, 7) über eine Mindestgröße nur auf die Wulstoberfläche trifft; die Lage des abgebildeten Lichtflecks (63, 64, 65) auf dem Fotodetektor (38) wird zur Bestimmung der Höhe der Wulst (5, 6, 7) ausgewertet.

2. Verfahren nach Anspruch 1,

dadurch gekennzeichnet, daß die Wulsthöhen für mehrere Kalanderwalzenpaare (1, 2, 3, 4) bestimmt werden, die in Förderrichtung hintereinander angeordnet sind.

3. Gerät zur Durchführung des Verfahrens nach Anspruch 1, mit einer Lichtfleckprojektionseinrichtung (31), mit einer Lichtfleckempfangseinrichtung (32) einschließlich eines Fotodetektors (38), der mehrere Empfangsbereiche zur Unterscheidung von Lichtintensitätsverteilungen aufweist und dementsprechend Signale abgibt, und mit einer Analyseanordnung (40, 41, 42, 43), welche die Signale des Fotodetektors (38) zur Abschätzung der Wulstmenge auswertet,

**gekennzeichnet** durch folgende Merkmale:

die Lichtfleckprojektionseinrichtung (31) bildet einen zur Breite der Wulst schmäleren Lichtfleck (19, 20, 29) in der Nähe der zu erwartenden Wulstoberfläche ab oder sendet ein enges Parallelstrahlenbündel an diese Stelle, so daß je nach der tatsächlichen Lage der Wulstoberfläche (23, 24, 25) unterschiedliche, entlang der optischen Achse - (33) der Lichtfleckprojektionseinrichtung (31) angeordnete Lichtfleckorte (53, 54, 55) anzutreffen sind;

die Lichtempfangseinrichtung (32) weist eine optische Achse (36) auf, die quer zur optischen Achse (33) der Lichtfleckprojektionseinrichtung (31) ausgerichtet ist.

4. Gerät nach Anspruch 3, dadurch gekennzeichnet, daß der Winkel ( α) zwischen der optischen Achse(33)der Lichtfleckprojektionseinrichtung (31) im Bereich der Wulstoberfläche und dem Lot (15) auf die Wulstoberfläche gleich dem im Bereich der Wulstoberfläche angetroffenen Winkel (β) zwischen der optischen Achse (36) der Lichtfleckempfangseinrichtung (32) und dem Lot (15) auf die Wulstoberfläche ist.

5. Gerät nach Anspruch 4,

dadurch gekennzeichnet, daß die Winkel (α,β) jeweils 45° betragen.

6. Gerät nach einem der Ansprüche 3 bis 5, dadurch gekennzeichnet, daß die optische Achse - (33) der Lichtfleckprojektionseinrichtung (31) und/oder der Lichtfleckempfangseinrichtung (32) durch eine oder mehrere spiegelnde Flächen (39, 44, 45) abgelenkt ist bzw. sind.

7. Gerät nach einem der Ansprüche 3 bis 6, dadurch gekennzeichnet, daß eine Einrichtung (80 bis 85) zur Bildung und Lenkung eines Schutzgasstromes vor optischen Flächen vorgesehen ist, die den Dunsteinfluß aus dem Vorratsmaterial (9) unterliegen könnten.

8. Gerät nach einem der Ansprüche 3 bis 7, dadurch gekennzeichnet, daß Kriechsperren (83) gegen niedergeschlagenen Dunst vor optischen Flächen vorgesehen sind.

9. Gerät nach einem der Ansprüche 3 bis 8, dadurch gekennzeichnet, daß Heizeinrichtungen für optische Flächen vorgesehen sind.

10. Gerät nach einem der Ansprüche 3 bis 9, dadurch gekennzeichnet, daß Verschiebeeinrichtungen für die Lichtfleckprojektions- und Auffangeinrichtung (31, 32) entlang des Wulstes vorgesehen sind.

0 211 989

Fig.1

Fig.2

Fig. 3

Fig. 5

Fig. 4

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | FR-A-2 197 707 (H. BERSTORFF MASCHINENBAU GmbH) * Ansprüche; Abbildungen 1-3 * | 1 | B 29 C 43/24 B 29 C 43/02 G 01 B 11/02 |
| A | | 3 | |
| X | US-A-4 221 973 (J.C. NOSLER) * Spalte 1, Zeilen 18-31; Abbildung 1 * | 3-5 | |
| A | US-A-3 264 682 (J.T. FREEMAN) * Spalte 2, Zeilen 52-57; Abbildung 1 * | 1-3 | |
| A | V.D.I.-ZEITSCHRIFT, Band 125, Nr. 21, November 1983, Seiten 873-879, Düsseldorf, DE; U. BREITMEIER: "Einsatz opto-elektronischer Sensoren in der Fertigungsmesstechnik sowie zum Steuern von Robotern" * Seite 876, Absatz 4, Zeilen 10-23; Abbildung 6 * | 1,3 | RECHERCHIERTE SACHGEBIETE (Int Cl.4) B 29 C G 01 B G 02 B |
| A | EP-A-0 061 385 (EQUIPEMENTS MECANIQUES SPECIALISES S.A.) * Seite 3, Zeilen 1-13; Abbildungen 1,2 * | 1,3,10 | |

-/-

Der vorliegende Recherchenbericht wurde für alle Patentansprüche erstellt.

| Recherchenort DEN HAAG | Abschlußdatum der Recherche 14-04-1986 | Prüfer BELIBEL C. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 240 691 (G. HÖLMQVIST et al.) <br> * Anspruch 1; Abbildung 1 * | 7,8 | |
| A | GB-A-1 138 451 (COMP. FRANCAISE THOMSON-HOUSTON HOTSHKISS) <br> * Anspruch 1; Abbildungen 1,3 * | 7,8 | |
| A | FR-A-1 578 940 (ELTRO GmbH & CO, GESELLSCHAFT FÜR STRALUNGSTECHNIK) <br> * Seite 2, Zeilen 19-26; Abbildung 1 * | 9 | |
| A | BE-A- 852 372 (CENTRE DE RECHERCHE METALLUGIQUES) <br> * Abbildung 1 * | 6 | |
| A | DE-A-2 522 060 (VEREINIGTE FLUGTECHNISCHE WERKE-FOKKER GmbH) <br> * Abbildungen 1,2 * | 10 | RECHERCHIERTE SACHGEBIETE (Int. Cl.4) |
| A | DE-A-3 301 462 (OEM MESSTECHNIK GmbH) <br> ----- | 1,3 | |

Der vorliegende Recherchenbericht wurde für alle Patentansprüche erstellt.

| Recherchenort <br> DEN HAAG | Abschlußdatum der Recherche <br> 14-04-1986 | Prüfer <br> BELIBEL C. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82